# EUROPÄISCHE PATENTSCHRIFT

(11) **EP 0 805 103 B1**
(45) Veröffentlichungstag und Bekanntmachung des Hinweises auf die Patenterteilung: **09.04.2003**
(21) Anmeldenummer: 97102857.6
(22) Anmeldetag: 21.02.1997
(51) Int. Cl.: B62M 11/16, F16D 41/14

(54) **Schaltbarer Klinkenfreilauf für Mehrgangnaben für Fahrräder**
Operating device for bicycle multispeed hub
Organe de commande pour moyeux à plusieurs vitesses pour bicyclette

(30) Priorität: 03.05.1996 DE 19617733
(43) Veröffentlichungstag der Anmeldung: 05.11.1997
(73) Patentinhaber: SRAM Deutschland GmbH, 97424 Schweinfurt (DE)
(72) Erfinder: Meier-Burkamp, Gerhard, Dipl.-Ing. (FH), 97493 Bergrheinfeld (DE)

(56) Entgegenhaltungen:
- EP-A- 0 531 608
- EP-A- 0 658 475
- DE-C- 4 402 344
- GB-A- 2 270 129
- US-A- 3 973 451

## Beschreibung

Die Erfindung bezieht sich auf einen schaltbaren Klinkenfreilauf für Mehrgangnaben für Fahrräder gemäß dem Oberbegriff des Anspruchs 1.

Mit der DE-OS 29 37 126 wird ein Steuermechanismus für eine Mitnehmerklinke bei einer Schaltnabe für eine Fahrrad beschrieben, der ein Klinkensteuerglied ausweist, welches gegen eine Mitnehmerklinke in axialer Richtung geschoben werden kann, wobei die Mitnehmerklinke eine Schräge aufweist. Das Klinkensteuerglied ist über ein Betätigungsglied axial beweglich, aber gegen Drehung gesichert angeordnet, wobei eine zur Schräge der Klinke passende Anschrägung am Klinkensteuerglied mit Taschen versehen ist, die es dem Betätigungsglied erlauben, daß Klinkensteuerglied an bestimmten Abschnitten etwas weiter in Richtung der Mitnehmerklinke zu verschieben. Die Übergänge der Taschen im Klinkensteuerglied sollen bewirken, daß der Übergang der Mitnehmerklinke von der Mitnehmerstellung in die Ruhestellung schneller und zügiger verläuft, wobei eine Aussteuerkraft für die Mitnehmerklinke erzeugt werden kann, die der Schräge der Tasche gegenüber der Schräge der Mitnehmerklinke entspricht. Ist die Mitnehmerkraft bei eingerückter Mitnehmerklinke jedoch noch größer, so wird das Klinkensteuerglied und mit ihm das Betätigungsglied abgewiesen und entgegen der Steuerrichtung zurückgeschoben. Eine solche Bewegung zu vermeiden, wurde in der vorliegenden Erfindung die Möglichkeit geschaffen, daß sich eine dem Klinkensteuerglied entsprechende Schaltbuchse nicht mehr axial gegen eine Klinke sondern mit einer Steuerkante unter die Klinke verschieben kann. Eine solche Anordnung gewährleistet, daß die Klinke durch Aussparungen und Steuerkanten auch dann ausgehoben wird, wenn eine Antriebslast anliegt, die wesentlich größer als die Steuerkräfte der Schaltbuchse sind.

Ferner ist mit der DE 44 15 266.3 A1 eine Schalteinrichtung für Wechselgetriebe in Mehrgangnaben für Fahrräder bekannt geworden, wo mehrere koaxial aneinander aufgereihte Schaltebenen, innerhalb derer über Nockensteuerung Schaltnokkenstangen, die an der Oberfläche der Nabenachse koaxial zu dieser verlegt sind, um ihrer Achse verschwenkbar werden und wo Klinkenkupplungen, die auf größerem Durchmesser im Wechselgetriebe der Nabe angeordnet sind, gleichzeitig und koordiniert zu der vorgenannten Nockensteuerungen der Sonnenräder gesteuert werden können. Eine solche Schaltkupplung ist mit einer in axialer Richtung verschiebbaren Schalthülse verwirklicht, die eine Schräge aufweist, die sich unter die Klinken der Klinkenkupplung schieben läßt, um diese auszuheben. Mindestens die Schalthülse weist eine Schräge auf, die eine bolzengelagerte Klinke durch Anheben der nach radial innen weisenden Klinkenteils nach außen verschiebt und somit den Klinkenverband mit einem außenliegenden Schaltring löst. Hier wie da ist eine Schalthülse mit Aussparungen, welche sich über die gesamte Klinkenbreite unter die Klinke schiebt, nicht nahegelegt.

Es ist daher die Aufgabe der Erfindung, einen schaltbaren Klinkenfreilauf für Mehrgangnaben zu schaffen, welcher eine Klinke auch für den Fall auszuheben im Stande ist, wenn diese unter größerer Antriebslast steht und, wobei in jedem Fall aber eine federunterstützte Verschiebung einer Schaltbuchse unter die auszuhebende Klinke gewährleistet wird. Die Lösung der Aufgabe wird in den Ansprüchen beschrieben.

Anhand von zeichnerischen Darstellungen wird ein Ausführungsbeispiel der vorgeschlagenen Erfindung beschrieben. Es zeigen:

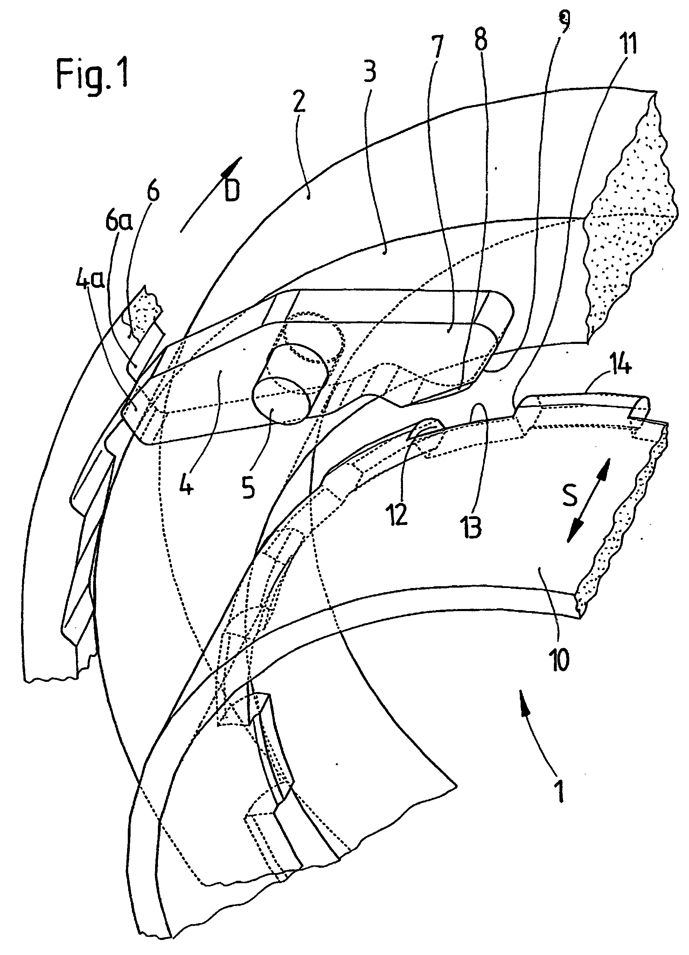

- Fig. 1: einen schaltbaren Klinkenfreilauf mit einem Schaltring, einer Klinke an einem Antreiber sowie einer Schaltbuchse in perspektivischer Darstellung;
- Fig. 2: den schaltbaren Klinkenfreilauf koaxial geschnitten;
- Fig. 3: die Schaltbuchse mit Aussparungen und Schaltkanten in Zusammenwirkung mit der Klinke im Schnitt quer zur Achse.

Wird mit 1 ein schaltbarer Klinkenfreilauf für Mehrgangnaben für Fahrräder bezeichnet, so besteht dieser aus einem Antreiber 2, einer auf dessen Stirnfläche 3 drehbar angeordnete und durch eine hier nicht dargestellte Klinkenfeder im Uhrzeigersinn angefederte Klinke 4, einem Schaltring 6 und einer Schaltbuchse 10. Die Klinke 4 ist auf einem Bolzen 5, dessen Achse parallel zur Nabenachse verläuft, drehbar gelagert und kann mit einer Mitnehmernase 4a in Klinkentaschen 6a des Schaltringes 6 eingreifen und eine Formschlußmitnahme dann erreichen, wenn der Schaltring 6 gegenüber dem Antreiber 2 in einer Drehrichtung D verdreht wird. Die Klinke weist auf dem der Mitnehmernase 4a gegenüberliegenden Ende eine Schaltnase 7 auf, die an der nach radial innen zur Nabenachse weisenden Seite eine Schräge 8 und in Umfangsrichtung eine Auflaufschräge 9 aufweist. Die Schaltbuchse 10 ist in Drehrichtung D fest und in einer Eingriffrichtung S in axialer Richtung verschiebbar. Die zur Klinke 4 hin gerichtete umlaufende Kante der Schaltbuchse 10 weist eine Rundung 14 auf, die mit der Schräge 8 zusammenwirken kann, sofern die Schaltbuchse 10 gegen die Klinke verschoben wird. Die umlaufende Kante mit der Rundung 14 weist Aussparungen 13 mit einer Tiefe von etwa der Breite der Klinke 4 auf, wobei sich zwei Stirnseiten 12 mit Steuerkanten 11 ausbilden. Die beiden Stirnseiten 12 haben voneinander einen Abstand, der größer ist, als der nach radial innen weisende Anteil der Schaltnase 7 mit der Schräge 8, so daß in einer bestimmten Stellung die Schalthülse 10 an der Klinke 4 vorbeischiebbar ist ohne diese zu berühren. Der radial nach innen gerichtete Anteil der Schaltnase 7 mit der Schräge 8 taucht somit in die Aussparung 13 ein, wenn die Mitnehmemase 4a im Eingriff mit den Klinkentaschen 6a des Schaltringes 6 ist. Es ist von Vorteil, wenn die beiden Stirnflächen 12 der Aussparung 13 soweit voneinander beabstandet sind, daß beim Eintauchen der Klinke 4 in die Aussparung 13 ausreichend Spiel verwirklicht ist, um während des Betriebes, nämlich dann, wenn der Antreiber 2 mit der Klinke 4 sich an der Schalthülse 10 vorbeidreht, noch genügend Zeit für das Einrücken der Schalthülse 10, die durch die Vorlast einer Druckfeder 15 geschaltet werden kann, bereitzustellen.

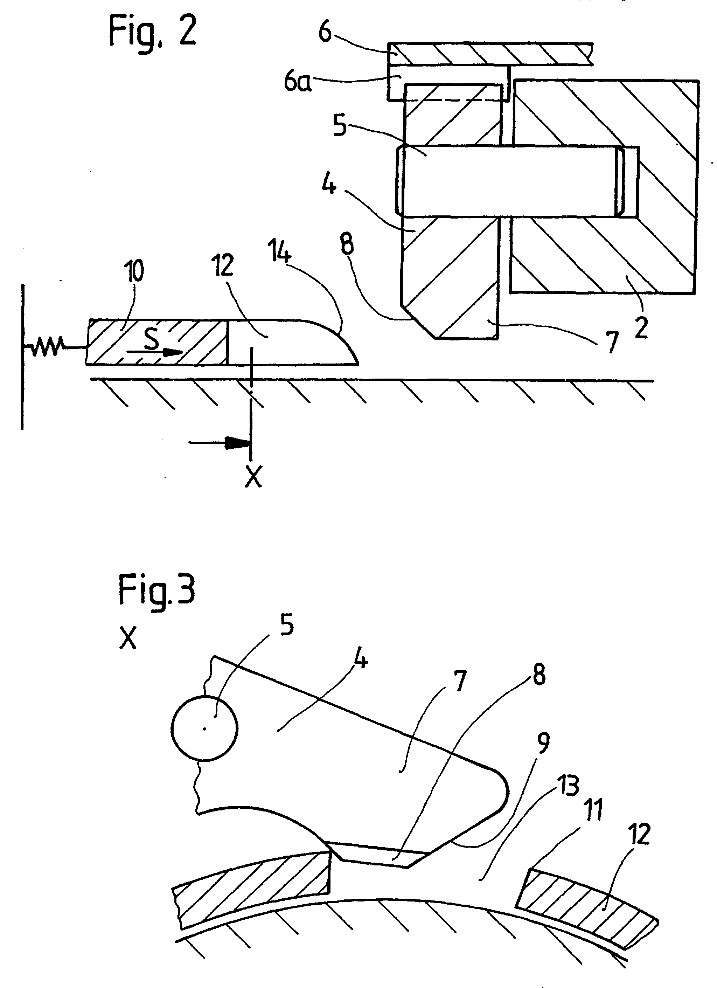

Wie die Fig. 2 zeigt, wird durch die Verschiebung der Schalthülse 10 in Eingriffsrichtung S der Schalthebel 10 die Rundung 14 mit der Schräge 8 in Verbindung gebracht, wodurch eine nach radial außen wirkende Kraftkomponente entsteht, die nach dem Prinzip einer Wippe die Mitnehmernase 4a aus den Klinkentaschen 6a des Schaltringes herausziehen will. Eine Schaltung nach diesem Prinzip funktioniert im wesentlichen bei Entlastung des gesamten Antriebssystems der Mehrgangnabe oder aber nur bei geringen übertragenen Drehmomenten. Im Fall der höheren Drehmomente also wird die Schaltbuchse 10 bei Berührung ihrer Rundung 14 an der Schräge 8 der Klinke 4 in dieser Lage verharren, bis eine Aussparung 13 der Schaltbuchse 10 an der Schräge 8 der Klinke 4 vorbeigeführt wird. In einer Position der Schalthülse 10 gegenüber der Klinke 4 und deren Schräge 8 gemäß Fig. 3 läßt sich die Schalthülse 10 in Eingriffsrichtung S an der nach radial innen gerichteten Schaltnase 7 vorbeibewegen, wodurch ein Formschluß der beiden Teile herbeigeführt wird. Dreht sich die Klinke 4 in Drehrichtung D weiter, so berührt die Auflaufschräge 9 die Steuerkante 11 und wird an dieser abgewiesen, mit dem Ergebnis, daß die Schaltnase 7 nach radial außen geschoben wird. Diese Bewegung findet ungeachtet der in diesem Moment aufliegenden Last statt, wodurch eine Schaltbewegung erzwungen wird, die für das Einlegen des gewünschten Ganges erforderlich ist. Wird die Schalthülse 10 gemäß Fig. 2 so weit unter die Klinke 4 geschoben, daß sich die Aussparung 12 an der Schräge 8 der Klinke 4 vorbeibewegt hat, so bleibt die Mitnehmernase 4a der Klinke 4 ständig außer Eingriff mit den Klinkentaschen 6a des Schaltringes 6.

Das vorbeschriebene System eines schaltbaren Klinkenfreilaufes hat den Vorteil einer Anordnung auf größeren Durchmessern mit geringen Erstreckungen in radialer Richtung.

## Patentansprüche

1. Schaltbarer Klinkenfreilauf (1) für Mehrgangnaben für Fahrräder, bestehend aus mindestens einer auf einem zur Nabenachse parallel verlaufenden Bolzen (5) drehbar gelagerten Klinke (4) an der Stirnfläche (3) eines Antreibers (2) sowie aus einem Schaltring (6) mit Klinkentaschen (6a) zur Aufnahme einer Mitnehmernase (4a) der Klinke (4), und schließlich aus einer in einer Eingriffsrichtung (S) hin und her beweglichen Schaltbuchse (10) , die mit einer an die Klinke (4) angeformte und mit einer Schräge (8) versehenen Schaltnase (7) in Schaltkontakt treten kann,
**dadurch gekennzeichnet,**
**daß** die Schaltbuchse (10) an der Stirnseite zu der Klinke (4) hin eine umlaufende Rundung (14) und mindestens eine Aussparung (13) aufweist, deren Erstreckung in Umfangsrichtung der Breite der Schaltnase (7) zuzüglich eines ausreichenden Bewegungsspiels aufweist für den Fall, daß die Klinke (4) mit ihrer Mitnehmernase (4a) in die Klinkentaschen (6a) eingreift.

2. Schaltbarer Klinkenfreilauf nach Anspruch 1,
**dadurch gekennzeichnet,**
**daß** die Aussparung (13) eine Tiefe von etwa der Breite der Klinke (4) aufweist.

3. Schaltbarer Klinkenfreilauf nach einem der Ansprüche 1 oder 2,
**dadurch gekennzeichnet,**
**daß** die Klinke (4) im Bereich der Schaltnase (7) eine Auflaufschräge (9) aufweist, die mit einer Steuerkante (11) zusammenwirkt, welche sich als Begrenzung der beiden Stirnflächen (12) der Aussparung (13) ergibt.

4. Schaltbarer Klinkenfreilauf nach einem der Ansprüche 1 bis 3,
**dadurch gekennzeichnet,**
**daß** die Schaltbuchse (10) durch eine Feder (15) in Eingriffsrichtung (S) vorspannbar ist.

## Claims

1. Selective ratchet freewheel (1) for multi-speed hubs for bicycles, consisting of at least one ratchet (4), rotatably mounted on a pin (5) running parallel to the hub axis, on the end face (3) of a driver (2), and of a shift ring (6) with ratchet pockets (6a) for receiving a driving lug (4a) of the ratchet (4), and finally of a shift bush (10) which can be moved back and forth in an engagement direction (S) and can come into shift contact with a shift lug (7) integrally formed on the ratchet (4) and provided with a bevel (8), **characterized in that** the shift bush (10), on the end face towards the ratchet (4), has an encircling rounded portion (14) and at least one recess (13), the extent of which in the circumferential direction has the width of the shift lug (7) plus sufficient clearance of motion in the event of the ratchet (4) engaging with its driving lug (4a) in the ratchet pockets (6a).

2. Selective ratchet freewheel according to Claim 1, **characterized in that** the recess (13) has a depth of about the width of the ratchet (4).

3. Selective ratchet freewheel according to one of Claims 1 or 2, **characterized in that** the ratchet (4), in the region of the shift lug (7), has an inclined contact surface (9) which interacts with a control edge (11) which is obtained as a limit of the two end faces (12) of the recess (13).

4. Selective ratchet freewheel according to one of Claims 1 to 3, **characterized in that** the shift bush (10) can be preloaded in engagement direction (S) by a spring (15).

## Revendications

1. Organe de commande (1) pour moyeux à plusieurs vitesses pour bicyclettes, se composant d'au moins un cliquet (4) supporté sur la face frontale (3) d'un entraîneur (2) de façon à pouvoir tourner sur un pivot (5) orienté parallèlement à l'axe du moyeu ainsi que d'une bague d'embrayage (6) avec des crans de cliquet (6a) destinés à recevoir un ergot d'entraîneur (4a) du cliquet (4), et enfin d'une douille d'embrayage (10) animée d'un mouvement réciproque dans une direction d'embrayage (S), qui peut venir en contact d'embrayage avec un ergot d'embrayage (7) formé sur le cliquet (4) et pourvu d'une rampe (8), **caractérisé en ce que** la douille d'embrayage (10) présente sur la face frontale tournée vers le cliquet (4) un contour arrondi (14) et au moins un évidement (13), dont l'extension dans le sens périphérique présente la largeur de l'ergot d'embrayage (7) augmentée d'un jeu de mouvement suffisant pour le cas où le cliquet (4) s'engage avec son ergot d'entraînement (4a) dans les crans de cliquet (6a).

2. Organe de commande suivant la revendication 1, **caractérisé en ce que** l'évidement (13) présente une profondeur valant environ la largeur du cliquet (4).

3. Organe de commande suivant l'une des revendications 1 ou 2, **caractérisé en ce que** le cliquet (4) présente dans la région de l'ergot d'embrayage (7) une rampe de montée (9), qui coopère avec une arête de commande (11), qui est formée par la limitation des deux faces frontales (12) de l'évidement (13).

4. Organe de commande suivant l'une quelconque des revendications 1 à 3, **caractérisé en ce que** la douille d'embrayage (10) peut être poussée initialement dans la direction d'embrayage (S) par un ressort (15).
